# EUROPÄISCHE PATENTSCHRIFT

(11) **EP 1 588 380 B1**
(45) Veröffentlichungstag und Bekanntmachung des Hinweises auf die Patenterteilung: **04.03.2009**
(21) Anmeldenummer: 03782266.5
(22) Anmeldetag: 02.12.2003
(51) Int. Cl.: G11C 29/00

(54) **VERFAHREN ZUR ERKENNUNG UND/ODER KORREKTUR VON SPEICHERZUGRIFFSFEHLERN UND ELEKTRONISCHE SCHALTUNGSANORDNUNG ZUR DURCHFÜHRUNG DES VERFAHRENS**
METHOD FOR THE RECOGNITION AND/OR CORRECTION OF MEMORY ACCESS ERRORS AND ELECTRONIC CIRCUIT ARRANGEMENT FOR CARRYING OUT SAID METHOD
PROCEDE DE RECONNAISSANCE ET/OU DE CORRECTION D'ERREURS D'ACCES A LA MEMOIRE ET CIRCUIT ELECTRONIQUE DESTINE A EFFECTUER LE PROCEDE

(30) Priorität: 15.01.2003 DE 10301310
(43) Veröffentlichungstag der Anmeldung: 26.10.2005
(73) Patentinhaber: Continental Teves AG & Co. oHG, 60488 Frankfurt am Main (DE)
(72) Erfinder: VOSS, Burkart, 07778 Dorndorf-Steudnitz (DE); TRASKOV, Adrian, 61449 Steinbach (DE); KIRSCHBAUM, Andreas, 64347 Griesheim (DE)
(86) Internationale Anmeldenummer: PCT/EP2003/013527
(87) Internationale Veröffentlichungsnummer: WO 2004/064075

(56) Entgegenhaltungen:
- EP-A- 0 255 449
- US-A- 3 789 204
- US-A- 4 726 021
- PATENT ABSTRACTS OF JAPAN vol. 016, no. 179 (P-1345), 28. April 1992 (1992-04-28) & JP 04 019900 A (MITSUBISHI ELECTRIC CORP), 23. Januar 1992 (1992-01-23)

## Beschreibung

Die Erfindung betrifft ein Verfahren zur Erkennung und/oder zur Korrektur von Speicherzugriffsfehlern in einem Rechnersystem, bei dem innerhalb eines Speichers zusätzlich zu abzusichernden Daten unter Verwendung dieser Daten erzeugte Prüfdaten abgelegt werden. Sie bezieht sich weiter auf eine elektronische Schaltungsanordnung, insbesondere zur Durchführung eines derartigen Verfahrens, mit einer mit einem Rechenkern und mit einem Speicher verbundenen Fehlererkennungseinrichtung.

Unter dem Begriff "Rechnersystem" werden ganz allgemein einzelne oder auch vernetzte Computersysteme, wie beispielsweise Mikrocontroller, verstanden, welche neben einer Zentralrecheneinheit (CPU) zusätzlich Speicher und Ein-/Ausgabefunktionen umfassen. Diese Systeme können als Systeme mit einem oder insbesondere mit mehreren Prozessorrechenkernen ausgeführt sein, wobei bei einem mehrkernigen System zwei oder mehrere als Rechenkerne bezeichnete Zentralrecheneinheiten vorgesehen sind.

Verfahren der genannten Art können insbesondere zur Überwachung und zur Fehlerkorrektur von Speichern in sicherheitskritischen Applikationen zum Einsatz kommen, welche insbesondere in einem elektronischen Kraftfahrzeugsteuerelement eingesetzt sein können. Durch ein derartiges Konzept kann somit insbesondere die Speicherarchitektur für einen Kraftfahrzeugrechner beeinflusst sein.

Elektronische Steuergeräte für Kraftfahrzeugbremsen übernehmen im Zuge der technischen Entwicklung immer mehr Funktionen des Bremssystems. In früheren Bremssystemen wurde in der Regel lediglich die Antiblockier ("ABS") -Funktion elektronisch gesteuert und geregelt, wohingegen in moderneren sogenannten "By-Wire"-Bremsanlagen die vollständige Bremsfunktion von elektronischem Steuergerät kontrolliert werden kann. Aufgrund der unmittelbaren Sicherheitsrelevanz derartiger Systeme besteht ein zunehmender Bedarf an elektronischen Kraftfahrzeugsteuergeräten mit besonders hoher Zuverlässigkeit.

Üblicherweise umfassen elektronische Kraftfahrzeugsteuergeräte zur Bewältigung der vergleichsweise komplexen Funktionen programmgesteuerte Mikroprozessorsysteme. Zur Verbesserung der Zuverlässigkeit derartiger Mikroprozessorsysteme kommen sogenannte Fehlererkennungssysteme oder- einrichtungen zum Einsatz, die bei der Speicherung von Daten in einem Speicher unter verwendung der abzusichernden Daten Prüfdaten erzeugen und gemeinsam mit den abzusichernden Daten abspeichern. Beim Wiederauslesen der Daten kann in einem nachfolgenden Schritt unter Zuhilfenahme der mit diesen abgelegten Prüfdaten festgestellt werden, ob ein Auslesefehler vorgekommen ist.

Die Zuverlässigkeit eines Kraftfahrzeugrechnersystems lässt sich nach der DE 101 09 449 auch dadurch verbessern, dass beim Lesen von Flash-Speichern durch den Mikroprozessor für jedes Wort/Halbwort Paritätsbits im gleichen Speicherbaustein oder in einem separaten Speicherbaustein abgelegt werden. Während des Speicherzugriffs werden ebenfalls Paritätsbits erzeugt und zum Zwecke der Fehlerüberprüfung mit den gespeicherten Prüfdaten verglichen.

Druckschrift US 3,789,204, worauf der Oberbegriff des Anspruchs 6 beruht, schlägt ein System zur Datenspeicherung vor, welches mittels einer Fehlererkennungseinrichtung Prüfdaten in Form von Paritätsbits aus den Daten und Adressen bildet um Speicherzugriffsfehler zu erkennen.

In Druckschrift US 4,726,021 wird ein Halbleiterspeicher mit einer Fehlerkorrekturfunktion beschrieben, der eine Fehlererkehnungseinrichtung zur Erzeugung von Prüfdaten aufweist, mit denen im Rahmen eines Testverfahrens die Fehlererkennungsreinrichtung überprüft wird.

Bei bekannten Verfahren zur Erkennung und/oder Korrektur von Speicherzugriffsfehlern werden die Prüfdaten üblicherweise mittels Fehlerkorrekturcodes, wie beilspielsweise einem Hamming Code oder einem Berger Code, erzeugt und auf dem jeweiligen Speicher hinterlegt, um transiente Fehler zu korrigieren, die garantierte Lebensdauer eines Produkts zu erhöhen oder durch das Maskieren von Fertigungsfehlern die Ausbeute bei der Herstellung zu erhöhen.

Bei insbesondere als Flash-Memory ausgeführten Applikationsspeichern können jedoch nur ganze Segmente gelöscht und programmiert werden. Ein vergleichsweise klein segmentierter Flash-Speicher benötigt eine erheblich größere Fläche im Vergleich zu einem Flash-Speicher mit größeren Segmenten. Herstellungsbedingt ist.die Größe der Segmente daher nach unten hin begrenzt. Da einzelne Programm- und Datenteile unabhängig voneinander programmiert und gelöscht werden müssen (sowohl die Daten als auch die zugehörige Parität) und die kleinste Segmentgröße der Parität beschränkt ist, ergeben sich bei derartigen Systemarchitekturen vergleichsweise große bereiche ungenutzten Speichers.

Der Erfindung liegt die Aufgabe zugrunde, ein Verfahren der oben genannten Art derart weiterzubilden, dass eine besonders hohe Zuverlässigkeit bei der Fehlererkennung und - korrektur erreichbar ist. Des Weiteren soll eine zur Durchführung des Verfahrens besonders geeignete elektronische Schaltungsanordnung angegeben werden.

Die Aufgabe wird erfindungsgemäß gelöst durch das Verfahren gemäß Anspruch 1 sowie die elektronische Schaltungsanordnung gemäß Anspruch 6.

Die Erfindung geht dabei von der Überlegung aus, dass bei bisherigen Konzepten zur Fehlererkennung und -korrektur die entsprechenden Routinen oder Einrichtungen in den Speicherwrapper integriert sind und dabei eine unmittelbare Kontrolle lediglich des Datenfeldes zulassen. Übertragungsfehler beim Auslesen der Daten, die beilspielsweise in Folge von Adressierungsfehlern oder dergleichen entstehen könnten, bleiben dabei unberücksichtigt. Um die Zuverlässigkeit bei der Fehlererkennung und ggf. -korrektur zu erhöhen, sollte daher auch die Adressierung in die Überprüfung mit einbezogen werden. Um dies auf besonders einfache Weise zu gewährleisten, werden die Prüfdaten unter Berücksichtigung der abzusichernden Daten einerseits und unter Berücksichtigung von deren Adressen andererseits erzeugt.

Eine besonders hohe Zuverlässigkeit bei der Fehlererkennung und ggf. -korrektur ist dabei erreichbar, indem vorteilhafterweise abzusichernde Daten gemeinsam mit den ihnen zugeordneten Prüfdaten an einen Datenempfänger übermittelt werden, wobei eine Auswertung der Prüfdaten zur Fehlererkennung erst nach der Datenübermittlung vorgenommen wird. Die Fehlererkennung und -korrektur wird dabei zum Empfänger der Daten hin verschoben, sodass eine Überwachung und Fehlerkorrektur sowohl des Datenfeldes als auch der Speicherwrapper mit Adressdecodierung und der Daten-/Adressleitungen gewährleistet ist.

In weiterer oder alternativer vorteilhafter Weiterbildung wird eine Auswertung der Prüfdaten zur Fehlererkennung in einer Fehlererkennungseinrichtung vorgenommen, die von einer Überprüfungseinheit überprüft wird. Somit wird die Erkennung und/oder Korrektur eventueller Fehler ihrerseits durch eine eigene Überprüfungseinheit überwacht. In weiterer vorteilhafter Ausgestaltung erzeugt die Überprüfungseinheit dabei Vergleichsprüfdaten aus Daten und Adressen, die mit Prüfdaten der Fehlererkennungseinrichtung und/oder mit Prüfdaten eines mit der Fehlererkennungseinrichtung verbundenen Speichers verglichen werden. Dabei werden aus den korrigierten Daten und den Adressen der zweiten CPU Checkbits berechnet und mit den eventuell korrigierten Checkbits vom Speicher verglichen. Ein derartiges Verfahren ist somit insbesondere für die Anwendung in einer mit zwei oder mehr Prozessrechenkernen geeignet.

Zur weiteren Erhöhung der Zuverlässigkeit und betrieblichen Sicherheit werden vorteilhafterweise zur Übertragung von Daten, Prüfdaten und Adressen zwischen der Fehlererkennungseinrichtung und einem Applikationsspeicher getrennte Busleitungen genutzt.

Bezüglich der elektronischen Schaltungsanordnung zur Durchführung des Verfahrens mit einer mit einem Rechenkern und mit einem Speicher verbundenen Fehlererkennungseinrichtung wird die genannte Aufgabe dadurch gelöst, dass die Fehlererkennungseinrichtung einen Prüfdatengenerator umfasst, der für im Speicher abzulegende Daten anhand dieser Daten und anhand ihrer Adressen Prüfdaten erzeugt.

Für eine besonders hohe Zuverlässigkeit und betriebliche Sicherheit ist die Fehlererkennungseinrichtung vorteilhafterweise aus dem Speichercore heraus zu einem Empfänger der Daten hin verschoben. Dabei ist die Fehlererkennungseinrichtung vorteilhafterweise über eine Anzahl von Busleitungen mit dem Speicher verbunden, wobei in weiterer vorteilhafter Ausgestaltung eine Trennung der Busleitungen derart vorgesehen ist, dass für Daten, Prüfdaten und Adressen jeweils separate Busleitungen vorgesehen sind.

In weiterer vorteilhafter Ausgestaltung ist der Fehlererkennungseinrichtung eine Überprüfungseinheit zugeordnet.

Die mit der Erfindung erzielten Vorteile bestehen insbesondere darin, dass durch die Einbeziehung der Adressen in die Generierung der Prüfdaten und insbesondere auch durch die Verlagerung der Fehlererkennung und -korrektur aus dem Speichercore heraus in den Bereich eines Empfängers für die Daten eine besonders hohe Zuverlässigkeit und betriebliche Sicherheit bei der Fehlererkennung und -korrektur erreichbar ist. Zusätzlich zu den eigentlichen Daten werden nämlich bei der Fehlererkennung die Adressen und insbesondere auch die Adressdecodierlogik mitüberprüft. Weiterhin ist die Überprüfung und eine mögliche Fehlerkorrektur der Daten- und Adressleitungen gewährleisten. Die somit erreichbare Erweiterung der Fehlererkennung auf die Übertragungswege kann besonders bei externen Komponenten mit vergleichsweise störanfälligen langen Verbindungswegen zum Rechenkern bedeutsam sein.

Die Fehlererkennung beim Adressdecoder ist dabei besonders vorteilhaft, wenn auslegungsbedingt nur ein einziger Adressdecoder verwendet werden soll. Durch die weiterhin vorgesehene Überprüfungseinheit für die Fehlererkennung an sich ist somit auch für diese eine Fehlererkennung bereitstellbar.

Ein Ausführungsbeispiel der Erfindung wird anhand einer Zeichnung näher erläutert. Darin zeigen:
- Fig. 1: schematisch eine elektronische Schaltungsanordnung, und
- Fig. 2: schematisch eine alternative Ausführungsform einer elektronischen Schaltungsanordnung.

Gleiche Teile sind in beiden Figuren mit denselben Bezugszeichen versehen.

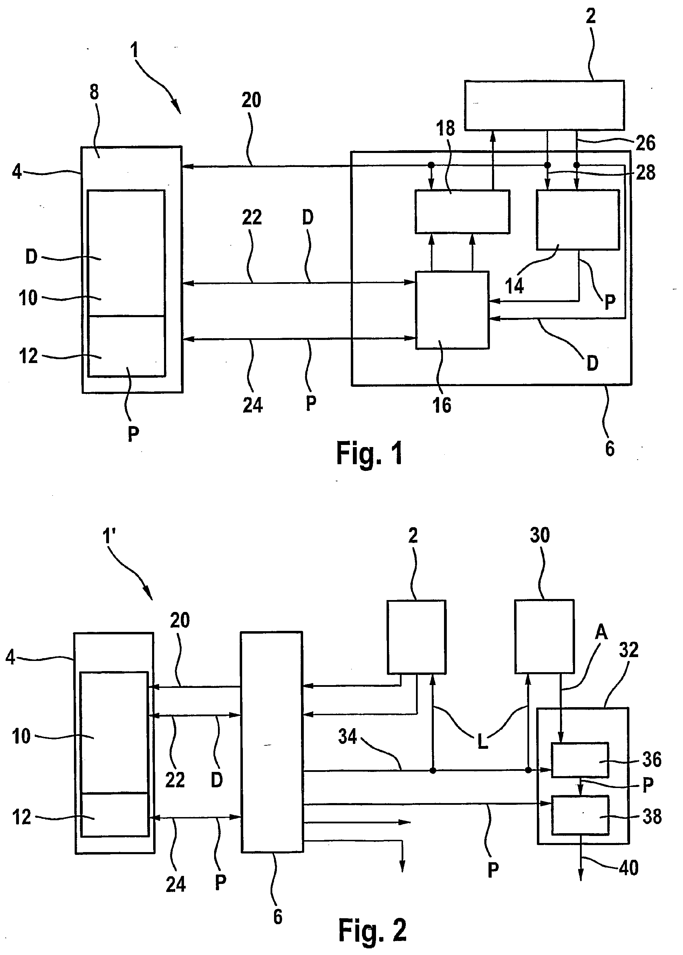

Die elektronische Schaltungsanordnung 1 gemäß Figur 1 ist insbesondere zum Einsatz im elektronischen Steuersystem für Kraftfahrzeugbremsen vorgesehen. Um dabei aufgrund der hohen Sicherheitsrelevanz im Hinblick auf mögliche Eingriffe in aktuelle Fahrsituationen eine besonders hohe Zuverlässigkeit und betriebliche Sicherheit zu gewährleisten, ist die elektronische Schaltungsanordnung 1 für eine Fehlererkennung und ggf. - korrektur bei der Bearbeitung von Daten ausgelegt. Zu diesem Zweck umfasst die elektronische Schaltungsanordnung 1 eine datenseitig zwischen einen auch als Zentralrecheneinheit oder CPU bezeichneten Rechenkern 2 und einen diesem zugeordneten Speicher 4 geschaltete Fehlererkennungseinrichtung 6. Die Fehlererkennungseinrichtung 6 dient dabei insbesondere dem Zweck, bei der Weiterleitung von Daten D aus dem Speicher 4 in den Rechenkern 2 eine hohe Zuverlässigkeit der ausgelesenen Daten D sicherzustellen und ggf. vorgefundene Fehler zuverlässig zu erkennen und ggf. zu korrigieren.

Der Speicher 4, in dem die Daten D hinterlegt sind, umfasst zusätzlich zu einem zur Adressdecodierung und Speicherverwaltung vorgesehenen Speicherwrapper 8 einen Speicherbereich 10 für die Daten D sowie einen weiteren Speicherbereich 12 für den Daten D zugeordnete Prüfdaten P.

Die Fehlererkennungseinrichtung 6 umfasst einen Prüfdatengenerator 14, eine Buslogikeinrichtung 16 sowie einen Korrekturblock 18. Die Fehlererkennungseinrichtung 6 ist über eine Anzahl von Busleitungen 20, 22, 24 mit dem Speicher 4 verbunden, wobei die Busleitung 20 in der Art einer Adressleitung zur Übermittlung von Adressdaten an den Speicherwrapper 8, die Busleitung 22 in der Art einer Datenleitung zur Übermittlung von Daten D an das Speichersegment 10 und die Busleitung 24 in der Art einer Codeleitung zur Übermittlung von Prüfdaten P an das Speichersegment 12 vorgesehen ist.

Zur Sicherstellung einer besonders hohen Zuverlässigkeit bei der Fehlererkennung und ggf. -korrektur ist die Fehlererkennungseinrichtung 6 dafür ausgelegt, die für die abzusichernden Daten D vorgesehenen Prüfdaten P einerseits unter Berücksichtigung der Daten D, andererseits aber auch unter Berücksichtigung von deren Adressen zu generieren. Dazu ist der Prüfdatengenerator 14 eingangsseitig sowohl über eine Datenleitung 26 als auch über eine mit der als Adressleitung vorgesehenen ersten Busleitung 20 verbundene Zweigleitung 28 mit dem Rechenkern 2 verbunden. Die somit unter Berücksichtigung von Daten D und der Adressen erzeugten Prüfdaten P können anschließend vom Prüfdatengenerator 14 an die Buslogikeinrichtung 16 übergeben werden, von der aus sie über die Busleitung 24 zur Abspeicherung an den Speicher 4 weitergegeben werden.

Darüber hinaus ist die Schaltungsanordnung 1 dafür ausgelegt, die Auswertung der Prüfdaten P zur Fehlererkennung erst nach der Datenübermittlung an einen Empfänger für die Daten D vorzunehmen. Dazu ist die Fehlererkennungseinrichtung 6 unter Vermeidung einer Integration in den Speicher 4 als separate, über die Busleitungen 20, 22, 24 mit dem Speicher 4 verbundene Komponente ausgeführt. Bei der Auswertung der aus dem Speicher 4 ausgelesenen Daten D und der diesen zugeordneten Prüfdaten P im Korrekturblock 18, bei der zudem auch die Adressen berücksichtigt werden, erfolgt somit die Fehlererkennung nicht nur für die eigentlichen Daten D, sondern auch für die zur Datenübertragung benötigten Übermittlungsleitungen und Adressen.

Die elektronische Schaltungsanordnung 1 im Ausführungsbeispiel gemäß Figur 1 ist als Recheneinheit mit lediglich einem Prozessrechenkern ausgeführt. Im Ausführungsbeispiel gemäß Figur 2 ist hingegen eine Ausführungsform mit zwei Prozessrechenkernen gezeigt, bei der zusätzlich zum ersten Rechenkern 2 noch ein weiterer, als CPU ausgeführter Rechenkern 30 vorgesehen ist. In diesem Ausführungsbeispiel ist der Fehlererkennungseinrichtung 6 zudem eine Überprüfungseinheit 32 zugeordnet, die ihrerseits als Fehlererkennungseinrichtung ausgestaltet ist. Die Fehlererkennungseinrichtung 6 liefert dabei über eine Datenleitung 34 Lesedaten L an den ersten Rechenkern 2 und auch an den zweiten Rechenkern 30. Die Lesedaten L sind dabei von der Fehlererkennungseinrichtung 6 bereits korrigierte Daten. Die Lesedaten L werden weiterhin einem Checkbit-Generator 36 in der Überprüfungseinheit 32 zugeführt, der anhand der Lesedaten L und von dem zweiten Rechenkern 32 übermittelten Adressen A Prüfdaten oder Checkbits P erzeugt. Diese werden in einer Vergleicher-einheit 38 mit von der Fehlererkennungseinrichtung 6 übermittelten korrigierten Checkbits oder Prüfdaten P verglichen, sodass eine Kontrolle der ordnungsgemäßen Funktionsfähigkeit der Fehlererkennungseinrichtung 6 vorgenommen werden kann. Das Vergleichermodul 38 liefert als Ausgangssignal über seinen Ausgangskanal 40 ggf. eine Fehlermeldung. Das gleiche gilt auch für die Überprüfungseinheit 6, über den Ausgangskanal 41.

### Bezugszeichenliste

- 1, 1': Schaltungsanordnung
- 1: Rechenkern
- 4: Speicher
- 6: Fehlererkennungseinrichtung
- 8: Speicherwrapper
- 10,12: Speicherbereich
- 14: Prüfdatengenerator
- 16: Buslogikeinrichtung
- 18: Korrekturblock
- 20,22,24: Busleitung
- 26: Datenleitung
- 27: Zweigleitung
- 30: Rechenkern
- 32: Überprüfungseinheit
- 34: Datenleitung
- 36: Checkbit-Generator
- 38: Vergleichermodul
- 40: Ausgangskanal

- A: Adressen
- D: Daten
- L: Lesedaten
- P: Prüfdaten

## Patentansprüche

1. Verfahren zur Erkennung und Korrektur von Speicherzugriffsfehlern in einem Rechnersystem, bei dem innerhalb eines Speichers (4) zusätzlich zu abzusichernden Daten (D) Prüfdaten (P) abgelegt werden, welche durch Codierung der Daten (D) mit einem Fehler-korrigierbaren Code erzeugt werden, wobei bei der Erzeugung der Prüfdaten (P) zusätzlich zu den abzusichernden Daten (D) auch deren Adressen berücksichtigt werden, und wobei eine Auswertung der Prüfdaten (P) zur Fehlererkennung in einer Fehlererkennungseinrichtung (6) vorgenommen wird, die von einer Überprüfungseinheit (32) überprüft wird, die ihrerseits an die Fehlererkennungseinrichtung (6) angeschlossen ist.

2. Verfahren nach Anspruch 1, **dadurch gekennzeichnet, dass** abzusichernde Daten (D) gemeinsam mit den ihnen zugeordneten Prüfdaten (P) an einen Datenempfänger übermittelt werden, wobei eine Auswertung der Prüfdaten (P) zur Fehlererkennung erst nach der Datenübermittlung vorgenommen wird.

3. Verfahren nach Anspruch 1 oder 2, **dadurch gekennzeichnet, dass** zur Überprüfung der Fehlererkennungseinrichtung (6) anhand der von dieser gelieferten Daten (D) und anhand von deren Adressen weitere Prüfdaten (P) erzeugt werden.

4. Verfahren nach einem der Ansprüche 1 bis 3, **dadurch gekennzeichnet, dass** die Überprüfungseinheit (32) Vergleichsprüfdaten aus Daten und Adressen erzeugt, die mit Prüfdaten (P) der Fehlererkennungseinrichtung (6) und/oder mit Prüfdaten eines mit der Fehlererkennungseinrichtung (6) verbundenen Speichers (4) verglichen werden.

5. Verfahren nach einem der Ansprüche 1 bis 4, **dadurch gekennzeichnet, dass** zur Übertragung von Daten (D), Prüfdaten (P) und Adressen (A) zwischen der Fehlererkennungseinrichtung (6) und einem Applikationsspeicher getrennte Busleitungen (20, 22, 24) genutzt werden.

6. Elektronische Schaltungsanordnung (1, 1'), insbesondere zur Durchführung des Verfahrens nach einem der Ansprüche 1 bis 5, mit einer mit einem Rechenkern (2) und mit einem Speicher (4) verbundenen Fehlererkennungseinrichtung (6), wobei die Fehlererkennungseinrichtüng (6) einen Prüfdatengenerator (14) umfasst, der für im Speicher (4) abzulegende Daten (D) anhand dieser Daten (D) und anhand ihrer Adressen Prüfdaten (P) erzeugt, **dadurch gekennzeichnet, dass** die Fehlererkennungseinrichtung (6) an eine Überprüfungseinheit (32) angeschlossen ist, die die Fehlererkennungseinrichtung überprüft.

7. Elektronische Schaltungsanordnung (1, 1') nach Anspruch 6, **dadurch gekennzeichnet, dass** die Fehlererkennungseinrichtung (6) über eine Anzahl von Busleitungen (20, 22, 24) mit dem Speicher (4) verbunden ist.

8. Elektronische Schaltungsanordnung (1, 1') nach Anspruch 7, **dadurch gekennzeichnet, dass** für Daten (D), Prüfdaten (P) und Adressen (A) jeweils separate Busleitungen (20, 22, 24) vorgesehen sind.

## Claims

1. Method for identifying and correcting memory access errors in a computer system, in which a memory (4) is used to store, in addition to data (D) to be protected, test data (P) which are produced by encoding the data (D) with an error-correctable code, wherein the production of the test data (P) takes account of the addresses of the data (D) to be protected in addition to said data, and wherein the test data (P) are evaluated for the purpose of error recognition in an error recognition device (6) which is checked by a checking unit (32) which, for its part, is connected to the error recognition device (6).

2. Method according to Claim 1, **characterized in that** data (D) to be protected are transmitted together with their associated test data (P) to a data receiver, wherein the test data (P) are evaluated for the purpose of error recognition only after the data transmission.

3. Method according to Claim 1 or 2, **characterized in that** the error recognition device (6) is checked by using the data (D) it supplies and the addresses of said data to produce further test data (P).

4. Method according to one of Claims 1 to 3, **characterized in that** the checking unit (32) produces comparison test data from data and addresses which are compared with test data (P) from the error recognition device (6) and/or with test data from a memory (4) connected to the error recognition device (6).

5. Method according to one of Claims 1 to 4, **characterized in that** data (D), test data (P) and addresses (A) are transmitted between the error recognition device (6) and an application memory using separate bus lines (20, 22, 24).

6. Electronic circuit arrangement (1, 1'), particularly for carrying out the method according to one of Claims 1 to 5, with an error recognition device (6) which is connected to a computation core (2) and to a memory (4), wherein the error recognition device (6) comprises a test data generator (14) which, for data (D) which are to be stored in the memory (4), uses these data (D) and uses their addresses to produce test data (P), **characterized in that** the error recognition device (6) is connected to a checking unit (32) which checks the error recognition device.

7. Electronic circuit arrangement (1, 1') according to Claim 6, **characterized in that** the error recognition device (6) is connected to the memory (4) by means of a number of bus lines (20, 22, 24).

8. Electronic circuit arrangement (1, 1') according to Claim 7, **characterized in that** separate bus lines (20, 22, 24) are respectively provided for data (D), test data (P) and addresses (A).

## Revendications

1. Procédé de détection et de correction d'erreurs d'accès à la mémoire dans un système informatique, avec lequel des données de contrôle (P), lesquelles sont générées avec un code dont les erreurs peuvent être corrigées en codant les données (D), sont stockées à l'intérieur d'une mémoire (4) en plus des données à sauvegarder (D), les adresses des données à sauvegarder (D) étant également prises en compte en plus de ces dernières lors de la génération des données de contrôle (P) et une analyse des données de contrôle (P) en vue de détecter les erreurs étant effectuée dans un dispositif de détection d'erreurs (6), lequel est contrôlé par un dispositif de contrôle (32) qui est de son côté raccordé au dispositif de détection d'erreurs (6).

2. Procédé selon la revendication 1, **caractérisé en ce que** les données à sauvegarder (D) sont transmises conjointement avec les données de contrôle (P) qui leur sont associées à un récepteur de données, une analyse des données de contrôle (P) en vue de détecter les erreurs n'étant effectuée qu'après la transmission des données.

3. Procédé selon la revendication 1 ou 2, **caractérisé en ce que** des données de contrôle supplémentaires (P) sont générées pour contrôler le dispositif de détection d'erreurs (6) au moyen des données (D) qu'il délivre et au moyen de ses adresses.

4. Procédé selon l'une des revendications 1 à 3, **caractérisé en ce que** l'unité de contrôle (32) génère des données de contrôle comparatives à partir des données et des adresses qui sont comparées avec les données de contrôle (P) du dispositif de détection d'erreurs (6) et/ou avec les données de contrôle d'une mémoire (4) reliée au dispositif de détection d'erreurs (6).

5. Procédé selon l'une des revendications 1 à 4, **caractérisé en ce que** des lignes de bus séparées (20, 22, 24) sont utilisées pour la transmission des données (D), des données de contrôle (P) et des adresses (A) entre le dispositif de détection d'erreurs (6) et une mémoire d'application.

6. Arrangement de circuit électronique (1, 1'), notamment pour mettre en oeuvre le procédé selon l'une des revendications 1 à 5, comprenant un dispositif de détection d'erreurs (6) relié à un noyau de calculateur (2) et à une mémoire (4), le dispositif de détection d'erreurs (6) comprenant un générateur de données de contrôle (14) qui génère des données de contrôle (P) pour les données (D) à stocker dans la mémoire (4) au moyen de ces données (D) et au moyen de leurs adresses, **caractérisé en ce que** le dispositif de détection d'erreurs (6) est raccordé à une unité de contrôle (32) qui contrôle le dispositif de détection d'erreurs.

7. Arrangement de circuit électronique (1, 1') selon la revendication 6, **caractérisé en ce que** le dispositif de détection d'erreurs (6) est relié à la mémoire (4) par le biais d'un certain nombre de lignes de bus (20, 22, 24).

8. Arrangement de circuit électronique (1, 1') selon la revendication 7, **caractérisé en ce que** des lignes de bus séparées (20, 22, 24) sont à chaque fois prévues pour les données (D), les données de contrôle (P) et les adresses (A).
